Europäisches Patentamt

European Patent Office

Office européen des brevets

(19)

(11) Publication number: **0 212 024**
B1

(12)

# EUROPEAN PATENT SPECIFICATION

(45) Date of publication of the patent specification:
18.01.89

(21) Application number: 85305946.7

(22) Date of filing: 21.08.85

(51) Int. Cl.⁴: **B65G 9/00**, B65G 39/09,
B65G 39/06, F16C 13/02

(54) **Monorail load transport apparatus.**

(43) Date of publication of application:
04.03.87 Bulletin 87/10

(45) Publication of the grant of the patent:
18.01.89 Bulletin 89/3

(84) Designated Contracting States:
BE DE FR GB IT NL

(56) References cited:
FR-A- 1 142 629
FR-A- 1 245 770
US-A- 1 429 118
US-A- 4 552 073

(73) Proprietor: BEEBE INTERNATIONAL, INC, 2724 Sixth
Avenue South, Seattle Washington 98124(US)

(72) Inventor: Smith, Glenn S., 2215-201st Avenue S.E.,
Issaquah Washington 98027(US)

(74) Representative: Arthur, Bryan Edward et al, Withers &
Rogers 4 Dyer's Buildings Holborn, London
EC1N 2JT(GB)

## Description

### Background of the Invention

This invention relates to improved monorail crane trucks or carriages and is herein illustratively described by reference to its presently preferred forms.

A number of proposals made over the years to improve the wear and stability characteristics of monorail crane carriages employed rollers tapered toward the monorail beam web and cantilevered on fixed, opposing horizontal shafts projecting in coalignment toward each other from opposite sides of a carriage frame yoke. Matching the taper of the rollers with the slope of the beam flange surface placed their full lengths in rolling contact with the track surfaces. Examples are found in US Patents 4 266 657 (Frost et al.); 3 971 601 (Sytsma); 4 178 856 (Dunville); 1 652 009 (Hoffmaster); and 667 868 (Cook). This was seen to be desirable as a means of stabilizing the carriage against rocking and slewing. For example, without such stabilization, offset of the crane's center of mass, or shifting of the center of mass back and forth laterally in relation to the vertical plane of the monorail beam web, could cause the carriage to rock back and forth on the track and to experience skips or intermittency in crane drive roller traction.

However, tapered roller construction has proved to be less than a satisfactory design concept because of the scouring and wear of tread and roller surfaces resulting from the inherent differential in surface speeds of the rollers along their lengths. Furthermore, application of heavy loads to the crane carriage deflecting the monorail beam track flanges downwardly caused a relatively abrupt transition from the desired stabilizing full-length, rolling contact of the roller surfaces with the flange surfaces to a zonal or line-contact condition wherein, at high loading, substantially the full weight was borne by the inner ends or tips of the rollers adjacent to the sides of the central beam web. This led to aggravated lateral instability along with aggravated localized wear of rollers and track (beam flange) surfaces. In addition, the asymmetrical loading of bearings supporting the rollers on their respective shafts shortened bearing life.

The alternative of employing untapered, cylindrical rollers mounted on cantilevered roller shafts, in turn mounted at an incline matching the slopes of the monorail beam flange bearing surfaces, reduced the no-load and light-load scouring and wear effects mentioned above, but represented no solution to the remaining problems just described. US Patent 1 429 118 (Townsend) which corresponds to the preamble of claim 1 illustrates that alternative type of carriage design.

Longitudinally convex rounding of the roller tread surfaces as in US Patent 2 997 966 (Chaplin et al.) and 2 611 326 (Smallpeice) was also proposed as an alternative configuration apparently in an attempt to achieve reduced scouring and wear effects as mentioned above and also wear distribution by progressive shifting of the contact pressure zones of the rollers back and forth on the beam flanges as a function of changing flange deflection with varying loads. However, the narrow lines or zones of running contact between the roller surfaces and the beam flanges still aggravated surface wear and contributed to carriage instability.

Costly hardening of beam flange surfaces to reduce track wear added unduly to the cost of an installation whether or not an I-beam or a wide flange I-beam was employed. Since wide flange I-beams, such as H-beams, are less expensive and more readily available than I-beams, attempts were made to use these. But, one again, the problem of aggravated wear with increasing load conditions, aggravated now by the greater flange width in relation to flange thickness, hence greater deflectability of the flanges under load, aggravated the wear and instability problems. Reinforcement of the lower beam flange against load deflection by bottom plates welded to the bottom face of the beam materially reduced flange deflection under load but added materially to installation cost.

An object of the present invention is to provide an improved monorail crane carriage of relatively low cost and one which mitigates or overcomes the problem limitations described above. This object is attained by providing a monorail crane carriage according to claim 1.

A more specific object hereof is to provide a crane carriage roller and mount system with reduced roller and track surface wear and with improved average lateral crane stability over a wide range of load conditions. At the same time, the invention provides a system of bearings for the crane rollers functioning to carry the loads and to transfer loads from the carriage shafts to the track surfaces with favorable distribution under varying conditions of loading of the carriage.

### Summary of the Invention

In accordance with this invention in its presently most preferred embodiment, load forces from the carriage are transmitted to cylindrical rollers from the carriage shafts through resiliently and angularly yieldable load-bearing means at the outer ends of the rollers, i.e., the ends remote from the beam web. At their inner, opposite ends, that is, at their ends adjacent the beam web, the rollers carry shaft loading through interposed roller bearings designed to accommodate angular changes between the roller axis and the associated shaft axis. As a result, while there is a shift along each roller of the median transverse plane of the effective center of load pressure applied by the roller to the flange track surface as a function of changing flange deflection under varying load, the roller continues to bear over substantially its fully length on the track surface at all loads so as to maximize carriage stability, and, to a substantial degree, distribute roller surface and tread surface wear over the maximum area. Thus, even at maximum load deflection of the beam flanges, the resilient follow-up, downward pressure on the outer ends of the rollers with attendant rocker action of the outer-end bearing means and the attendant accommodative rocker of the otherwise rigidly supportive bearing means at the inner ends of the rollers maintain the roller surface in full-length contact with the deflected beam flanges while the cantilevered roller-supported shafts themselves remain substantially coaligned and undeflected. By selecting an appropriately high-spring constant in the resiliently deflectable load bearing means interposed between the outer end portions of the rollers and their associated carriage shafts, the longitudinal positioning of the effective centers of load pressure on the roller tread surfaces, while shifting with load variations, remains located between the ends of the rollers with attendant benefits in terms of carriage stability and minimum localization of tread surface and flange surface wear.

These and other features, objects and advantages of the invention will become more fully evident as the description proceeds by reference to the accompanying drawings.

French Patent FR 1 245 770 describes a shock-absorbing bearing for a badly aligned transmission shaft.

Brief Description of the Drawings

Figure 1 is a simplified end sectional view of an H-beam monorail carriage track and monorail carriage mounted on the same.

Figure 2 is an enlarged sectional end view of the lower portion of a monorail H-beam showing one of the track flanges engaged by a carriage roller formed in accordance with the most preferred embodiment of this invention.

Figure 3 is a transverse sectional view taken on line 3–3 in Figure 2.

Figure 4 is a transverse sectional view taken on line 4–4 in Figure 2.

Figure 5 is an enlarged operating sectional end view corresponding to that of Figure 2 illustrating, albeit with exaggeration, the effect of increased loading causing beam flange deflection and roller positionally accommodative self-adjustment associated therewith.

Figure 6 is an enlarged fragmentary sectional view taken on line 6–6 in Figure 5.

Figure 7 is a sectional end view similar to Figure 5 illustrating an alternative embodiment, while Figure 8 is a sectional end view illustrating the self-adjustment action of the roller of still another alternative embodiment.

Detailed Description Referenced to the Drawings

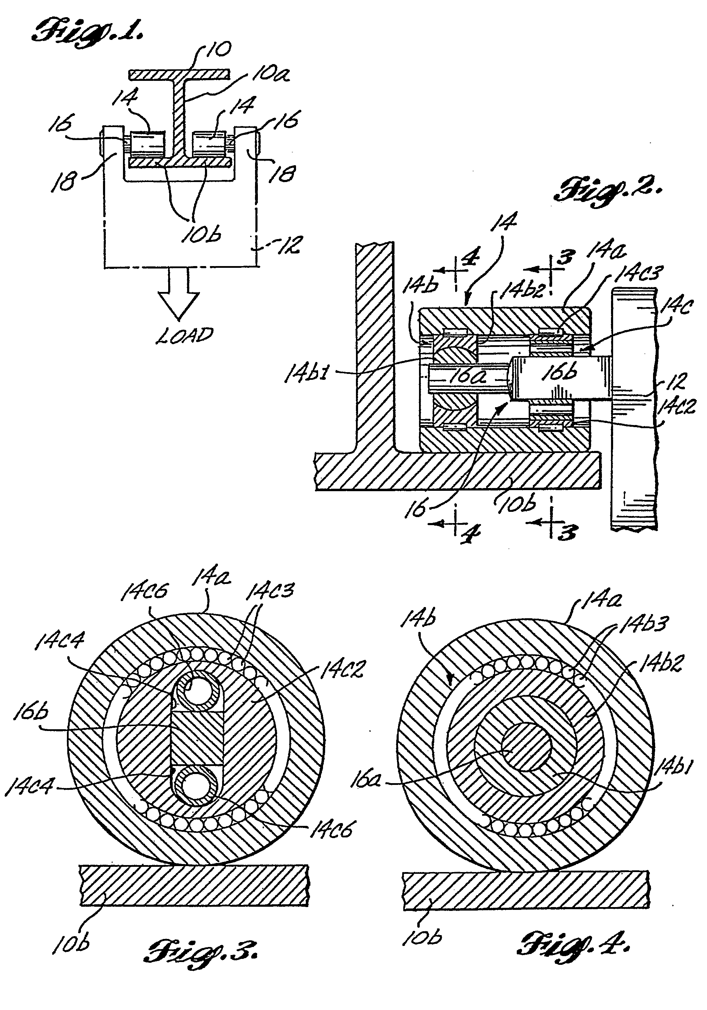

As depicted in Figure 1, the monorail track 10 for crane carriage 12 has H-beam design characteristics, meaning two sets of parallel flanges (upper and lower) interconnected by an upright web at right angles to the flanges and an overall beam height substantially equal to the overall beam width. In its illustration, the web 10a is approximately the same thickness as the lower set of flanges 10b which serve as tracks for the illustrated set of oppositely positioned carriage rollers 14. The latter are mounted on opposing cantilevered shafts 16 and supported substantially rigidly in axial coalignment by carriage arms 18. It will be recognized, of course, that two or more such pairs of rollers may be used in a single carriage to provide the necessary longitudinal carriage stability and load support distributed along the beam.

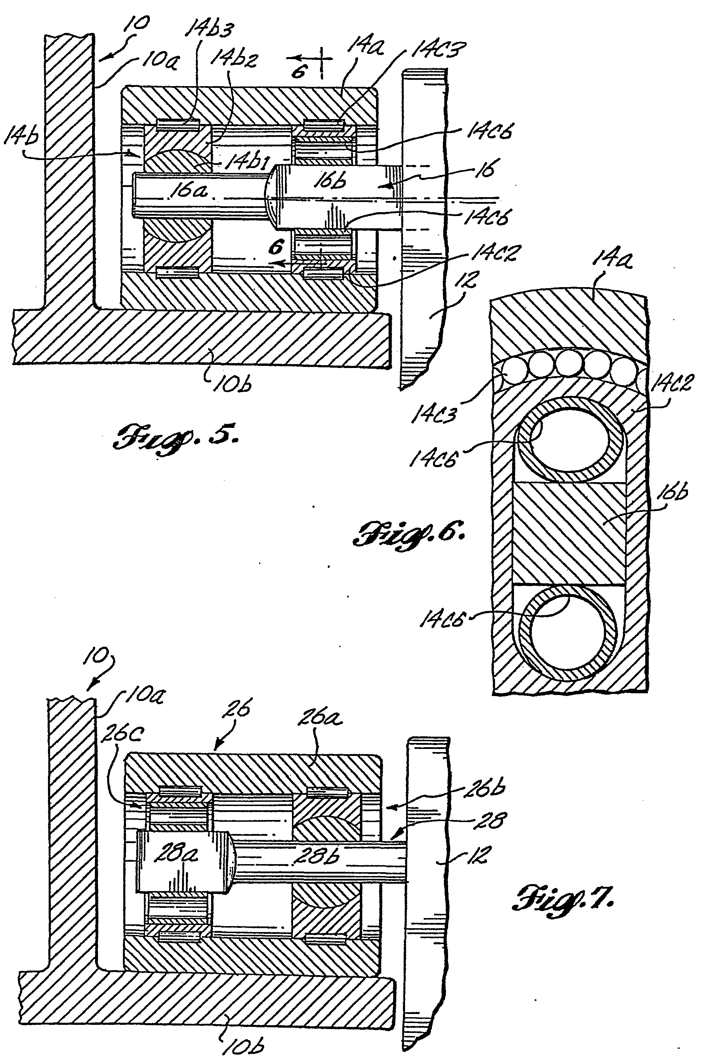

As shown in Figures 2–6, each roller 14 comprises an annular tread, cylindrical roller member 14a rotatively journaled on special antifriction roller bearings 14b and 14c, with the latter spaced lengthwise on the cantilevered support shaft 16 and, in effect, respectively supporting and being supported by inboard and outboard end portions of member 14a. Antifriction bearing 14b supporting the inner end of tread member 14a adjacent beam web 10a comprises coaxial annular inner and outer bearing ring members 14b1 and 14b2 respectively. These interengage by way of spherical contact surfaces permitting one to rock or tilt relative to the other. The inner bearing ring member 14b1 is fixed on the round projecting end portion 16a of shaft 16. Between tread member 14a and the outer bearing ring member 14b2 is a captive annular series of bearing rollers 14b3 held in circumferentially spaced relationship around the periphery of bearing ring member 14b2 and captured within opposing matching annular grooves in tread member 14a and the outer periphery of bearing ring member 14b2, as best illustrated in Figure 4. These serve to provide antifriction support for tread member 14a on shaft 16 by way of the rocker bearing ring combination 14b1 and 14b2; also to maintain the cooperating parts fixed lengthwise of the shaft.

Antifriction bearing 14c supporting the outer end of tread member 14a remote from beam web 10a comprises a disk-like journal member 14c2 journalling the tread member 14a on captive bearing rollers 14c3 much the same as in the case of bearing 14b. However, there the specific similarity ends. Member 14c2 has a central flat-sided slot 14c4 through it. The correspondingly flat-sided base portion 16a of cantilevered shaft 16 passes slidably but snugly through this slot, as best illustrated in Figure 3. The transverse upper and lower ends of slot 14c4 are preferably rounded forming with the respective flat top and bottom faces of the shaft portion 16b, chambers which retain nominally round upper and lower vertically compressive tubular spring members 14c6. Under no-load or slight-to-moderate load conditions the tubular spring members 14c6 are balanced under approximately compressional loading. As carriage load increases, and thereby deflects the beam flange 10b downward from the dashed line position illustrated in Figure 5, the lowermost of the two precompressed tubular spring members 14c6 expands and thereby continues, although with reduced force, to press the outer end of tread member 14a against the flange tread surface. This is permitted by accommodative flattening of the upper of the tubular spring members 14c6. Tilting or rocking of the tread member 14a in the vertical plane of the central axis of shaft 16 accompanies such downward flange deflection under heavy loading and is permitted by the adaptive rocking of the two bearings 14b and 14c. Rocking of bearing 14c is permitted by the action depicted in Figure 6 wherein the spring tubes are shown to be differentially expandable and compressible from one end to the other, and the sliding engagement between the flat sides of slot 14c4 and of shaft portion 16b permits that kind of relative motion along with pure translational motion perpendicular to the axis of cantilevered shaft 16.

In operation, therefore, it will be appreciated that under no-load or slight-load conditions the tread member 14a comprising the rolling surface member of roller 14 bears over its full length on the upper tread surface of horizontal beam flange 10b. Because the tread surface of member 14a is cylindrical (of constant radius over its length) and flange 10b is flat, configurational relationship provides the desired nonscouring, stabilizing bearing contact between the roller and the beam surface under such conditions. As load force applied to the carriage 12 increases, hence downward deflection of flange 10b, however, the tread member 14a accommodatively follows the tilt of the flange by itself in tilting or rocking in relation to the fixed horizontal axis of cantilevered shaft 16. While such roller action is accompanied by a progressive decrease in the percentage of total load borne by the outer bearing 14c in relation to that borne by the inner bearing 14b, nevertheless, the tread member 14a continues to remain in running engagement with the flange surface over the full length of the roller. This action is permitted due to the resilient yield of the tubular spring members 14c6 in the bearing 14c and by the accommodative tilting or rocking action of both bearings. Hence, while centering of bearing load shifts lengthwise of the bearing roller ring as a function of load variations, that center remains located more nearly centered between the ends than with prior devices, and material improvements are attained in tread or track life and with carriage stability using the relatively inexpensive and available H-beam as the monorail carriage support. Yet another advantage is that the inboard shift of the bearing load reduces the cantilever load on the H-beam flange, thus increasing the load-carrying capacity of the H-beam.

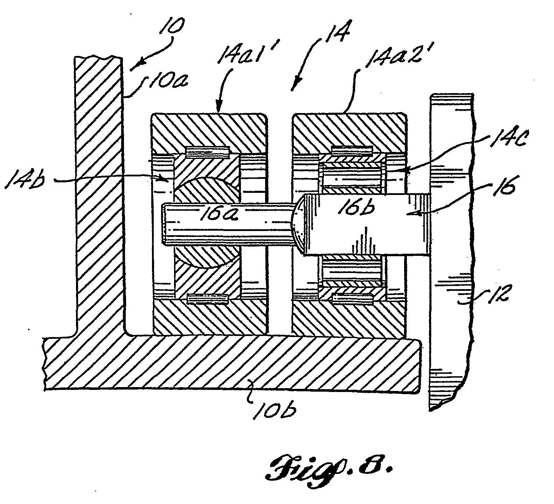

In Figure 7 shaft configuration and the associated positioning of the two bearings is reversed in supporting the tread member 26a of roller 26. In this instance the projecting end portion 28a of the shaft 28 is the portion of rectangular or square cross-section, whereas the base portion 28b (most remote from the beam web) is round in cross-section. In this instance, antifriction, rocking, rigid bearing 26b is formed as the bearing 14b in the first-described embodiment. The antifriction, rocking, resiliently yieldable bearing 26c is formed as the bearing 14c in the first-described embodiment. Although the positions of these bearings supporting the tread ring 26a are reversed endwise of the shaft 28, their combined functions are effective to maintain the tread member 26a in rolling contact with the monorail beam flange 10b over substantially the full length of the tread member throughout the anticipated range of carriage loading. However, the arrangement is less favored due to the greater moment arm of load center applied to cause downward deflection of beam flange 10b with the rigid bearing 26b spaced farther from beam web 10a than in the prior embodiment.

In both such embodiments (Figures 2–6 and Figure 7), the tread member 14a or 26a should be formed with at least limited capacity to flex under heavy loads such that beam flange deflection curvature, however slight it may be, it adaptively followed in the tread member's longitudinal line of bearing contact with the flange to the degree necessary to keep the roller in full-length engagement with the flange at all times.

In the alternative embodiment shown in Figure 8, the first-described embodiment appears with tread member 14' now formed in two separate parts 14a1' and 14a2' and the bearings associated with them. The part 14a1' is rotatively supported by bearing 14b and the part 14a2' by bearing 14c. In this modified configuration, improved uniformity of roller tread surface engagement with the beam flange 10b as a function is increasing flange deflection to the extent that downward flange deflection, particularly under heavy carriage loads, is accompanied by some curvature of the flange. An articulated roller tread member (14') is better enabled to retain uniformity of full-length tread surface engagement with the track flange curving than does a unitized roller tread member (14) to the extent the latter does not adaptively flex into a conforming curvature longitudinally along its line of track surface contact.

These and other aspects and modifications or variations in the practice of the invention are intended to be within the scope of the claims that follow.

## Claims

1. A monorail crane carriage (12) adapted to run on the lower web-supported flanges of a generally horizontal H-beam (10), said carriage including a frame supported by and supporting load-bearing rollers (14) mounted respectively on coaligned opposing support shafts (16) which are frame-cantilevered to project inboard transversely in relation to the beam web (10a), said rollers (14) each comprising annular tread means (14a) with relatively inboard and outboard portions having cylindrical tread surfaces in running engagement with an H-beam lower flange (10b), and separate antifriction bearing means (14b and 14c) for each roller (14) rotatively supporting the respective inboard and outboard portions of said tread means (14a) on a shaft (16), characterised by one such separate bearing means (14c) comprising resiliently carriage load-compressed support means (14c2–c6) interposed between the associated tread means portion (14a) and the shaft (16) permitting rocking of such tread means portion (14a) accompanied by translational yielding thereof in relation to the shaft (16) for maintaining running contact with the flange (10b) of the tread surface of such portion over its full length as flange (10a) deflection changes with varying carriage load.

2. The carriage defined in Claim 1, wherein the annular tread means of each roller comprises an integral annular member, including both said inboard and outboard tread means portions.

3. The carriage defined in Claim 2, wherein the inboard and outboard tread means portions of each roller are separated lengthwise of the associated shaft.

4. The carriage defined in Claims 1, 2 or 3, wherein said one bearing means has its support means interposed between the shaft and the outboard tread means portion.

5. The carriage defined in Claims 1, 2 or 3, wherein said one bearing means has its support means interposed between the shaft and the outboard tread means portion, and wherein the other bearing means comprises universally pivotal support means interposed between the shaft and the inboard tread means portion and substantially unyieldable in translation in relation to the shaft.

6. The carriage defined in Claims 1, 2 or 3, wherein said one bearing means has its support means interposed between the shaft and the outboard tread means portion, and wherein the other bearing means comprises universally pivotal support means interposed between the shaft and the inboard tread means portion and substantially permitting rocking of said inboard tread means but without yielding thereof in translation in relation to the shaft as flange deflection changes with varying carriage load.

7. The carriage defined in Claim 4, wherein the resiliently carriage-load-compressed support means interposed between the associated tread means and the shaft comprises a journal member through which the shaft passes in transversely slidable nonrotative relationship permitting rocking of the journal member relative to and in a load plane containing the shaft axis and permitting translational movement of the member transverse to the shaft in such plane, said journal member being surrounded by and having means rotatively journalling the associated tread means portion thereon, and resiliently yieldable positioning means interposed between the shaft and said journal member yieldably maintaining the journal member at an intermediate rocked and translated position relative to the shaft with no load on the carriage and resiliently yielding to continue pressing the tread means portion against the beam flange with increasing carriage load and attendant increased flange deflection.

8. The carriage defined in Claim 7, wherein the shaft has a flat-sided portion and the journal member has a complementary flat-sided slot slidably engaged by such flat-sided portion permitting such rocking and translational movement transverse to the shaft.

9. The carriage defined in Claim 8, wherein the slot in the journal member accommodates the shaft portion intermediate opposite ends of the slot, and the resiliently yieldable positioning means comprise spring elements respectively interposed between opposite ends of the slot and said shaft portion.

10. The carriage defined in Claim 9, wherein the spring elements comprise resiliently compressible tubular elements oriented in the slot for tubular cross sectional deformation by relative motion between such shaft portion and said journal member.

## Patentansprüche

1. Ein Schienenkranwagen (12), der so ausgebildet ist, daß er auf den unteren vom Steg gehaltenen Schenkeln eines im wesentlichen horizontalen Doppen-T-Trägers (10) laufen kann, wobei der Wagen einen Rahmen aufweist, der von Lastaufnahmerollen (14) gehalten ist und die Lastaufnahmerollen (14) hält, die jeweils an in einer Linie zueinander ausgerichteten gegenüberliegenden Halteachsen (16) angebracht sind, die freitragend so am Rahmen angebracht sind, daß sie quer bezüglich des Trägersteges (10a) nach innen vorstehen, wobei jede Rolle (14) eine ringförmige Laufflächeneinrichtung (14a) mit relativ innen und außen liegenden Teilen, die zylindrische Laufflächen in Laufineingriffnahme mit einem unteren Schenkel (10b) des Doppel-T-Trägers aufweisen, und separate Wälzlagereinrichtungen (14b und 14c) für jede Rolle (14) aufweist, die drehend jeweils die innen und außen liegenden Teile der Laufflächeneinrichtung (14a) auf einer Achse (16) halten, dadurch gekennzeichnet, daß eine der separaten Lagereinrichtungen (14c) eine elastische durch die Wagenlast komprimierte Halteeinrichtung (14c2-c6) umfaßt, die zwischen dem zugehörigen Laufflächeneinrichtungsteil (14a), und der Achse (16) liegt und eine Hin- und Herbewegung der Laufflächeneinrichtungsteils (14a) verbunden mit einer Quernachgiebigkeit bezüglich der Achse (16) erlaubt, um den Laufkontakt der Lauffläche dieses Teils über seine gesamte Länge mit dem Schenkel (10b) beizubehalten, wenn sich die Biegung des Schenkels (10a) mit sich ändernder Wagenlast ändert.

2. Wagen nach Anspruch 1, bei dem die ringförmige Laufflächeneinrichtung jeder Rolle ein in einem Stück damit ausgebildetes Ringelement umfaßt, das sowohl den innen als auch den außen liegenden Laufflächeneinrichtungsteil einschließt.

3. Wagen nach Anspruch 2, bei dem der innen und der außen liegende Laufflächeneinrichtungsteil jeder Rolle in Längsrichtung der zugehörigen Achse getrennt sind.

4. Wagen nach Anspruch 1, 2 oder 3, bei dem die Halteeinrichtung einer Lagereinrichtung zwischen der Achse und dem außen liegenden Laufflächeneinrichtungsteil liegt.

5. Wagen nach Anspruch 1, 2 oder 3, bei dem die Halteeinrichtung einer Lagereinrichtung zwischen der Achse und dem außen liegenden Laufflächeneinrichtungsteil liegt und bei dem die andere Lagereinrichtung eine Universaldrehlagereinrichtung umfaßt, die zwischen der Achse und dem innen liegenden Laufflächeneinrichtungsteil liegt und im wesentlichen quer bezüglich der Achse unnachgiebig ist.

6. Wagen nach Anspruch 1, 2 oder 3, bei dem die Halteeinrichtung einer Lagereinrichtung zwischen der Achse und dem außen liegenden Laufflächeneinrichtungsteil liegt und die andere Lagereinrichtung eine Universaldrehlagereinrichtung umfaßt, die zwischen der Achse und dem innen liegenden Laufflächeneinrichtungsteil liegt und im wesentlichen eine Hin- und Herbewegung des innen liegenden Laufflächeneinrichtungsteils erlaubt, jedoch ohne quer bezüglich der Achse nachgiebig zu sein, wenn sich die Biegung des Schenkels mit sich ändernder Wagenlast ändert.

7. Wagen nach Anspruch 4, bei dem die elastische durch die Wagenlast komprimierte Halteeinrichtung zwischen der zugehörigen Laufflächeneinrichtung und der Achse ein Lagerelement, durch das die Achse in einer in Querrichtung verschiebbaren nicht drehenden Beziehung hindurchführt, die eine Hin- und Herbewegung des Lagerelementes bezüglich einer und in einer Lastebene, in der die Achse liegt, und eine Querbewegung des Elementes quer zur Achse in dieser Ebene erlaubt, wobei das Lagerelement eine Einrichtung aufweist, von der es umgeben ist, die drehbar den zugehörigen Laufflächeneinrichtungsteil darauf lagert und eine elastisch nachgebende Positioniereinrichtung umfaßt, die zwischen der Achse und dem Lagerelement angeordnet ist und nachgiebig das Lagerelement in einer mittleren hin- und herbewegten und quer verschobenen Lage relativ zur Achse ohne Last am Wagen hält und elastisch nachgiebig ist, um fortdauernd den Laufflächeneinrichtungsteil gegen den Trägerschenkel mit zunehmender Wagenlast und folglich zunehmender Biegung des Schenkels zu halten.

8. Wagen nach Anspruch 7, bei dem die Achse einen Teil mit flacher Seite aufweist und das Lagerelement einen komplementären Schlitz mit flacher Seite aufweist, der gleitend von dem flachseitigen Teil in Eingriff genommen ist, so daß eine Hin- und Her- und Querbewegung quer zur Achse möglich ist.

9. Wagen nach Anspruch 1, bei dem der Schlitz im Lagerelement den Achsenteil in der Mitte zwischen den gegenüberliegenden Enden des Schlitzes aufnimmt und die elastisch nachgiebige Positioniereinrichtung Federelemente umfaßt, die jeweils zwischen den gegenüberliegenden Enden des Schlitzes und dem Achsenteil angeordnet sind.

10. Wagen nach Anspruch 9, bei dem die Federelemente elastische komprimierbare rohrförmige Elemente umfassen, die im Schlitz so ausgerichtet sind, daß ihr Rohrquerschnitt durch die relative Bewegung zwischen diesem Achsenteil und dem Lagerelement verformt wird.

## Revendications

1. Chariot (12) de grue monorail adapté pour rouler sur les semelles inférieures portées par l'âme d'une poutre (10) en double T horizontale en règle générale, ledit chariot comprenant un cadre porté par, et supportant des rouleaux porteurs (14) montés respectivement sur des arbres (16) de support opposés coalignés qui sont en porte-à-faux sur le cadre afin d'être en saillie vers l'intérieur transversalement par rapport à l'âme (10a) de la poutre, lesdits rouleaux (14) comprenant chacun des moyens (14a) de bande de roulement annulaires avec des parties relativement internes et externes ayant des surfaces de roulement cylindrique en contact de roulement avec une semelle (10b) inférieure de la poutre en double T, et des moyens de palier antifriction séparés (14b et 14c) pour chaque rouleau (14) portant de manière rotative les parties internes et externes respectives desdits moyens (14a) de bande de roulement sur un arbre (16), caractérisé par un de ces moyens de palier (14c) séparés comprenant des moyens de support (14c2–c6) comprimés de manière élastique par la charge du chariot et interposés entre la partie (14a) des moyens de bande de roulement associés et l'arbre (16), permettant l'oscillation de cette partie (14a) des moyens de bande de roulement accompagnées par une élasticité de translation de ceux-ci par rapport à l'arbre (16) afin de maintenir un contact de roulement avec la semelle (10b) de la surface de la bande de roulement de cette partie sur toute sa longueur lorsque le fléchissement de la semelle (10a) change avec le changement de charge du chariot.

2. Chariot selon la revendication 1, dans lequel les moyens de bande de roulement annulaires de chaque rouleau comprennent un élément annulaire monobloc incluant les deux dites parties internes et externes des moyens de bande de roulement.

3. Chariot selon la revendication 2, dans lequel les parties internes et externes des moyens de bande de roulement de chaque rouleau sont séparées dans le sens de la longueur de l'arbre associé.

4. Chariot selon les revendications 1, 2 ou 3, dans lequel un desdits moyens de palier a ses moyens de support interposés entre l'arbre et la partie externe des moyens de bande de roulement.

5. Chariot selon les revendications 1, 2 ou 3, dans lequel un desdits moyens de palier a ses moyens de support interposés entre l'arbre et la partie externe des moyens de bande de roulement, et dans lequel les autres moyens de palier comprennent des moyens de support articulés à pivot interposés entre l'arbre et la partie interne des moyens de bande de roulement et sensiblement rigide en translation par rapport à l'arbre.

6. Chariot selon les revendications 1, 2 ou 3, dans lequel un desdits moyens de palier a ses moyens de support interposés entre l'arbre et la partie externe des moyens de bande de roulement et dans lequel les autres moyens de palier comprennent des moyens de support articulés à pivot interposés entre l'arbre et la partie interne des moyens de bande de roulement et permettant une oscillation desdits moyens internes de bande de roulement mais sans élasticité de ceux-ci en translation par rapport à l'arbre lorsque le fléchissement de la semelle change avec la variation de la charge du chariot.

7. Chariot selon la revendication 4, dans lequel les moyens de palier comprimés par la charge du chariot de manière élastique, interposés entre les moyens de bande de roulement associés et l'arbre, comprennent un élément de tourillon au travers duquel passe l'arbre en relation non rotative de glissement transversal permettant l'oscillation de l'élément de tourillon par rapport à et dans un plan de charge contenant l'axe de l'arbre et permettant le déplacement en translation de l'élément perpendiculairement à l'arbre dans ce plan, ledit élément de tourillon étant entouré par et ayant des moyens tourillonnant de manière rotative la partie des moyens de bande de roulement associée à eux, et des moyens de positionnement elastiques interposés entre l'arbre et ledit élément de tourillon maintenant de manière élastique l'élément de tourillon selon une position intermédiaire inclinée et translatée par rapport à l'arbre sans charge sur le chariot et élastique pour continuer d'appuyer la partie des moyens de bande de roulement contre la semelle de la poutre lorsque la charge de chariot s'accroit avec un fléchissement associé accru de la semelle.

8. Chariot selon la revendication 7, dans lequel l'arbre possède une partie plate et l'élément de tourillon possède une encoche plate complémentaire dans laquelle vient glisser cette partie plate, permettant ce mouvement d'oscillation et de translation perpendiculaire à l'arbre.

9. Chariot selon la revendication 8, dans lequel l'encoche dans l'élément de tourillon reçoit la partie de l'arbre intermédiaire entre les extrémités opposées de l'encoche et les moyens de positionnement élastiques comprennent des éléments de ressort respectivement interposés entre des extrémités opposées de l'encoche et de ladite partie de l'arbre.

10. Chariot selon la revendication 9, dans lequel les éléments de ressort comprennent des éléments tubulaires compressibles et élastique orientés dans l'encoche pour une déformation tubulaire transversale par le mouvement relatif entre cette partie de l'arbre et ledit élément de tourillon.

Fig.1.

10
10a
14
14
16
16
18
18
10b
12

LOAD

Fig.2.

14
14b
4
3
14a
14C3
14C
14b2
14b1
16a
16b
12
14C2
16
4
10b
3

Fig.3.

14C6
14a
14C3
14C4
14C2
16b
14C4
14C6
10b

Fig.4.

14b
14a
14b3
14b2
16a
14b1
10b

EP 0 212 024 B1

Fig. 5.

Fig. 6.

Fig. 7.

Fig. 8.